# EUROPEAN PATENT APPLICATION

(11) **EP 4 275 821 A1**
(43) Date of publication of application: **15.11.2023**
(21) Application number: 22172576.5
(22) Date of filing: 10.05.2022
(51) Int. Cl.: B23B 27/04, B23B 27/16, B23B 29/04

(54) **TURNING INSERT, TURNING TOOL BODY AND TURNING TOOL FOR CUTTING METAL WORKPIECES**

(71) Applicant: WALTER AG, 72072 Tübingen (DE)
(72) Inventor: ZEEB, Rudi, 75072 Tübingen (DE)
(74) Representative: Sandvik

(57) **Abstract**

The present invention relates to turning insert, a turning tool body and turning tool for cutting metal workpieces, preferably by grooving or parting. The turning insert comprises at least one cutting head and a support body (7) extending rearward from the cutting head (5) .The support body (7) comprises a top surface (14) and a bottom surface (15), which each extend longitudinally rearward form the cutting head, which both comprise one insert interface (18) each for. Each insert interface (18) comprises a set of flanks (19, 22) forming alternating parallel, straight and rearward extending ridges (20) and grooves (21), wherein the ridges (20) and grooves (21) extend in a length direction. Each flank (19, 22) of each set of flanks extends from an outer peak (26) of an associated ridge (20) to an inner bottom (24) of an associated groove (21), Each set of flanks (19, 22) comprises a central main pair of flanks (22), which consists of the first flank on a respective lateral side of the longitudinal axis (8). At least along a major portion of the extension in the length direction of the flanks (19, 22), as seen in the cross section perpendicular to the length direction, the depth (31) of the central main pair of flanks (22) is larger than the depth (31) of all other flanks (19) of the same insert interface (18).

## Description

### Technical field

The present invention relates to turning insert, a turning tool body and turning tool for cutting metal workpieces, preferably by grooving or parting.

### Background

EP 2 082 820 discloses a turning tool comprising a cutting insert and an insert holder. The insert holder comprises a recess for receiving the cutting insert. The recess has an opening through which the cutting insert can be inserted into the recess. The cutting insert has an upwardly facing contact surface and a downwardly facing contact surface, which both are provided with a teethed area. When the cutting insert is mounted in the recess in the holder, the teeth of the upwardly facing contact surface is received in associated grooves in an opposite, downwardly facing surface of the recess, and the teeth of the downwardly facing contact surface is received in associated grooves in an opposite, upwardly facing surface of the recess. A problem with this known turning tool is that the cutting insert in some cases during operation tends to break at it longitudinal sides.

### Summary

An object of the present invention is to at least partly obviate the above mentioned problem. This object is achieved according to the invention by means of a turning insert, a turning tool body and a turning tool for cutting metal workpieces, preferably by grooving or parting according to claims 1, 14 and 15.

An inventive turning insert for cutting metal workpieces, preferably by grooving or parting, has an insert body comprising
- a first cutting head at a front end and a support body extending rearward from the first cutting head, wherein the support body has a longitudinal axis extending rearward from the first cutting head,
wherein the support body comprises
- a top surface and a bottom surface, which each extend longitudinally rearward form the cutting head,
- a first lateral side surface and a second lateral side surface, which both, along a respective lateral side of the support body, extend longitudinally rearward from the cutting head and are connected with the top surface and the bottom surface along a respective longitudinal edge, wherein
- the top surface and the bottom surface both comprise one insert interface each for, when the turning insert is received in an insert seat in a tool body, mate with a respective one of two tool interfaces,
wherein
- each insert interface comprises a set of flanks forming alternating parallel, straight and rearward extending ridges and grooves, wherein the alternating ridges and grooves extend in a length direction,
- each flank of each set of flanks extends from an outer peak of an associated ridge to an inner bottom of an associated groove,
- each set of flanks comprises a central main pair of flanks, which consists of the first flank on a respective lateral side of the longitudinal axis,
- as seen in a cross section perpendicular to the length direction, the outer contour of the alternating ridges and grooves forms a wave curve, which wave curve has an amplitude in a depth direction, wherein each flank has a depth measured in the depth direction, wherein the central main pair of flanks have the same depth at least along a major portion of the extension in the length direction, and
- at least along a major portion of the extension in the length direction of the flanks, as seen in the cross section perpendicular to the length direction, the depth of the central main pair of flanks is larger than the depth of all other flanks of the same insert interface.

Thus, each insert interface comprises a set of flanks forming alternating parallel, straight and rearward extending ridges and grooves. Each set of flanks comprises a central main pair of flanks, which consists of the first flank on a respective lateral side of the longitudinal axis. The central main pair of flanks have the same depth so that they form either a central ridge or a central groove. Due to the depth of the central main pair of flanks being larger than the depth of all other flanks of the same insert interface, the ridge/groove formed thereby is larger than all other ridges/grooves of the interface. Thereby, the insert interface is provided with the largest pair of flanks at the longitudinal center, where the turning insert is strongest. At the same time, flanks closer to the lateral side can be provided less deep so that they are less prone to break. Since the central main pair of flanks are larger, they will take up a larger proportion of the forces that are exerted on the turning insert than the other flanks of the insert interface. Thus, flanks closer to the lateral sides are subjected to a smaller proportion of the exerted forces so that the risk of the turning insert breaking, for example chipping of the ridges at the lateral sides, is reduced. Thanks to the combination of deep and less deep flanks according to the invention, the interface has a large total flank area, which ensures stable support for the insert in an insert seat during use, and strong, less deep flanks at the lateral sides where damage is most likely to occur.

The turning insert according to the present invention is a cutting insert suitable for metal cutting in turning operations. Preferably, the turning insert is suitable for parting and grooving. For example, the turning insert may be used in operations comprising mainly cutting in the radial direction of a rotating workpiece. Embodiments of the turning insert may be used in operations involving cutting along the longitudinal axis of a rotating workpiece. The turning insert is especially beneficial in operations that exert side forces on the turning insert due to the large main pair of flanks.

The turning insert is suitable for cutting metal workpieces such as steel. Preferably, the turning insert, or at least a cutting edge thereof, comprises a wear resistant material such as for example coated or noncoated cemented carbide, cermet, ceramic, diamond or CBN.

The turning insert has a body which comprises a first cutting head at a front end and a support body extending rearward from the first cutting head along a longitudinal axis. Preferably, the first cutting head is provided with a rake surface, a clearance surface and with a cutting edge at an intersection of the rake surface with the clearance surface. Preferably, the rake surface is comprised in a top surface of the first cutting head and the clearance surface at least partly in a front end surface of the first cutting head.

According to at least one embodiment, the cutting edge is formed at a longitudinally forward end of the first cutting head and has a transverse extension laterally across the longitudinal axis. The cutting edge may include a portion on both lateral sides that extends mainly in the longitudinal direction. As seen in a top view, the transverse portion of the cutting edge optionally is mainly linear, or has a V-shape or arc-shaped. As seen in a view toward the front end, the transverse portion of the cutting edge optionally is mainly linear, or has a V-shape or arc-shape.

A lateral axis extends in the lateral direction and is perpendicular to the longitudinal axis.

The cutting edge has a maximal lateral length form a first lateral side to a second lateral side. According to an embodiment, the cutting edge has a maximal length in the lateral direction across the longitudinal axis of 2 - 6 mm. The maximal length of the cutting edge is the maximal breadth of the cutting head. The turning insert according to an embodiment is of a type that is suitable to be mounted in a turning tool body in form of a blade.

The support body typically defines a body having four major surfaces that extend rearward from the first cutting head in the longitudinal direction. These surfaces include a top surface, a bottom surface, and two lateral side surfaces. Optionally, the overall shape of the support body is similar to or forms a cuboid. According to at least one embodiment, the support body has an overall shape of a plate, wherein the thickness of the plate corresponds to the breadth and the first and second lateral sides are the main surfaces of the plate. Optionally, the support body has a larger or a smaller extension along the longitudinal axis than in a lateral direction and in a direction perpendicular to both the longitudinal and the lateral direction.

The top and bottom surfaces extend on opposite sides of the support body and face away from each other. Preferably, the top and bottom surfaces are parallel at least along a major portion in the longitudinal direction. The top and/or the bottom surface may include part surfaces in form of raised or recessed portions to facilitate clamping or enhancing coolant flow, for example. Optionally, the top and/or the bottom surface mainly extend in a single plane, comprises several part surfaces extending in planes angled relative each other, or be curved surfaces or part surfaces. Preferably, an angled top and/or bottom surface, or an angled part surface thereof, is angled only relative the longitudinal axis and is parallel with/comprises the lateral axis.

A first lateral side surface and a second lateral side surface, along a respective lateral side of the support body, are connected with the top surface and the bottom surface along a respective longitudinal edge. The lateral side surfaces face in opposite lateral directions. Optionally, at least along a major longitudinal extension, the lateral side surfaces are parallel or converge downward and/or rearward. The lateral side surfaces may include raised or recessed portions to facilitate clamping or enhancing coolant flow, for example.

The longitudinal axis extends mid-way between the lateral side surfaces and is optionally a central longitudinal axis. During use, the longitudinal axis may be perpendicular to the axis of a rotating workpiece.

An insert interface is provided both in the top surface and in the bottom surface. Each insert interface comprises a set of flanks forming alternating parallel, straight and rearward extending ridges and grooves. Thanks to the alternating ridges and grooves being parallel, straight and rearward extending, the turning insert is insertable in an insert seat of a tool body that has opposed, mating tool interfaces. Therein, ridges and grooves of opposed, mating interfaces engage, wherein ridges of one interface are slidable along grooves of the respective mating interface.

The ridges each have an outer peak and the grooves each have an inner bottom. Each flank of each set of flanks extends from an outer peak of an associated ridge to an inner bottom of an associated groove. Optionally, the peaks are convex and the bottoms concave, or comprise planar plateaus.

The alternating ridges and grooves of each insert interface extend in a length direction, wherein they follow the respective surface from a longitudinally forward end to a longitudinally rearward end. Since the ridges and grooves are formed by the flanks, the extension of the flanks is the same as the extension of the ridges and grooves.

Preferably, the alternating ridges and grooves are longitudinal. In other words, as seen in a top view, the length direction is parallel with the longitudinal direction. Thereby the full longitudinal length of the support body may be used for the flanks which creates a large area of support. An example of such an embodiment has a support body with parallel top and bottom surfaces such as a support body with a basic shape of a rectangular cuboid. In other embodiments adapted to special holders for special operations, as seen in a top view, the length direction extends at an angle to the longitudinal axis, for example at an angle of less 10°.

At least along a major portion of the extension in the length direction, preferably the along the entire extension in the length direction, each flank is uninterrupted. Thereby the whole length of the support body may be used by the flanks so that a large area for receiving forces during use is achieved.

According to an embodiment, for example the embodiment mentioned above where the top and/or bottom surface comprises angled part surfaces, the top and/or bottom surface may have a varying distance to a central plane. In such embodiments, the alternating ridges and grooves, in addition to the longitudinal extension, also may have an extension in a direction perpendicular to both the longitudinal direction and the lateral direction. In such embodiments, the length direction is different in different positions along the longitudinal axis of the turning insert.

The outer contour of the alternating ridges and grooves of each insert interface in any longitudinal position may be viewed in a cross section through the turning insert that is perpendicular to the length direction. In this cross section, the outer contour of the alternating ridges and grooves forms a wave-shaped curve. The plane of this cross section comprises the lateral axis. Depending on the extension of the top/bottom surface, the plane may be tilted around that axis in order for the length direction of the ridges and grooves to be normal to the plane.

As seen in this cross section that is perpendicular to the length direction, the wave-shaped curve has an amplitude. Generally, the amplitude of a wave-shaped curve as seen in a coordinate system of two perpendicular axis xy, is a distance from a local minimum to an adjacent local maximum as measured in the direction of the y-axis. For the wave-shaped curve of the outer contour of the alternating ridges and grooves as seen in the cross section perpendicular to the length axis, the y-axis corresponds to an axis in the plane of the cross section that is perpendicular to the lateral axis. The direction of this y-axis is a depth direction. An outer peak of an associated ridge corresponds to a local maximum and an inner bottom of an associated groove corresponds to a local minimum. The depth of each flank is a distance in the depth direction from an outer peak of the associated ridge to the inner bottom of an associated groove.

The set of flanks of each insert interface comprises a central main pair of flanks, which are the first flanks on a respective lateral side of the longitudinal axis. At least along a major portion of the extension in the length direction of the flanks, as seen in the cross section perpendicular to the length direction, the depth of the main pair of flanks is larger than the depth of all other flanks of the same insert interface. In addition to providing a turning insert that has improved resistance against breaking, thanks to the deep main pair of flanks, it is also possible to ensure that the turning insert is mounted correctly in an insert seat of a tool body. Thanks to the larger flanks of the main pair, the insert interfaces will only fit in one correct position of a tool interfaces with a mating pair of larger central flanks.

According to an embodiment, in each insert interface, the set of flanks comprises pairs of flanks. In addition to the central main pair of flanks, each set comprises several auxiliary pairs of flanks, which are located on both lateral sides of the main pair of flanks. Both flanks of each auxiliary pair of flanks have the same depth. Preferably, each pair of the auxiliary pairs of flanks have a depth of at most 1/3 of the depth of the central main pair of flanks. It has been discovered that this is a good compromise between the desire to have deep flanks for providing large areas for receiving forces and shallow, stronger flanks. A sufficiently large proportion of foresees acting on the turning insert during use is received centrally at the strongest part of the turning insert by the larger, main pair of flanks, so that the smaller more vulnerable flanks to the lateral sides are less exposed. Furthermore, it is ensured that the difference to the other flanks is sufficient to securely ensure that the turning insert only can be received in the intended central position in a mating tool interface of tool body. Preferably, the depth of the main pair of flanks is 0, 4 - 0, 8 mm. This is a suitable depth for the most common sizes of turning inserts.

Optionally, all flanks of all the auxiliary pairs of flanks have the same depth, or, for each pair of the auxiliary pairs of flanks, the depth decreases laterally outwards from the central main pair. Thereby, flanks further away from the main pair of flanks are less deep so that the smallest proportion of forces acting on the turning insert during use are received at the lateral sides where the turning insert is most vulnerable. Preferably, the depth decreases linearly.
According to at least one embodiment, the alternating ridges and grooves of each insert interface comprise a laterally outermost ridge at each lateral side, and at least two inner ridges therebetween, wherein the peaks of all ridges have the same distance to the top surface. Thereby the varying depth of the flanks is created by differently deep grooves. This configuration is beneficial with respect to production and with respect to tolerances for an accurate fit in a mating tool interface.

The ridges each have an outer peak and the grooves each have an inner bottom. Each flank of each set of flanks extends from an outer peak of an associated ridge to an inner bottom of an associated groove. Optionally, the peaks are convex and the bottoms concave, or comprise planar plateaus.

An insert interface is provided both in the top surface and in the bottom surface. Optionally, the insert interface extends over the entire respective surface, or a portion thereof. For example, the insert interface extends over a longitudinal portion and/or a lateral portion of the respective surface such as a central portion. Therein, the insert interface may not cover portions at the front end, at a rear end or at the lateral sides.

For example, as seen in the cross section perpendicular to the length direction, laterally inwards of each lateral side surface, the alternating ridges and grooves of each insert interface each have an extreme point formed by either a peak or a bottom, and a laterally outermost extreme point, as measured in the lateral direction, has a distance to the closest lateral side surface of at least 40% of the distance to the next extreme point laterally inward therefrom. Thereby, advantageously a strong lateral edge is achieved, which is less prone to breaking or chipping.

The extreme points are points of each flanks that are furthest away from each other in the depth direction. In embodiments where ridges and grooves have planar peaks and bottoms, a point in the middle between the two connecting flanks is to be used for measuring the distance to the lateral side.

Preferably, the insert interface extends from over substantially the whole breadth of the turning insert from the first lateral side surface to the second lateral side surface. For example, as seen in the cross section perpendicular to the length direction, laterally inwards of each lateral side surface, the alternating ridges and grooves of each insert interface each have an extreme point formed by either a peak or a bottom, and a laterally outermost extreme point, as measured in the lateral direction, has a distance to the closest lateral side surface of at least 40% of the distance to the next extreme point laterally inward therefrom. Thereby, several the alternating ridges and grooves formed by the flanks can be fitted in the interface, so that side forces can be distributed between as many flanks and over a large area of the many flanks.

Preferably, the insert interface of the top surface and the bottom surface are symmetrical to each other, for example with respect to 180° rotation around the longitudinal axis and/or 180° rotation around a lateral axis. Thereby, advantageously the turning insert can be placed with their top surface facing in opposing directions depending on the tool holder and the operation that is to be performed.

According to an embodiment, as seen in the cross section perpendicular to the length direction, each flank has a tangent in a mid-point at half the depth, which tangent forms an angle α with an axis extending in the depth direction, wherein the angle α is 25° - 35°, and more preferably 28° - 31°. Large angles are suitable for strong flanks, while small angles provide a large extension of the flanks in the depth direction, which is positive for countering side forces. It has been found that these angles make a good compromise, i.e. strong ridges on one hand and large flank area in the depth direction on the other hand.

Optionally, all flanks have the same angle α or the angle α of the central main pair of flanks is larger than the angle α of all other flanks of the same insert interface. Thereby the central main pair of flanks, which carries a large proportion of the forces, is stronger, while the flanks to the lateral sides, which carry a smaller proportion of the forces, are facing in a more suitable angle for receiving forces. Optionally, all the auxiliary pairs of flanks have the same angle α, or, for each pair of auxiliary pairs of flanks, the angle α decreases laterally outwards from the main pair. A varying angle α may be beneficial with respect to the insert jamming in a mating tool interface.

Preferably, as seen in a cross section perpendicular to the length direction, all pairs of flanks of both insert interfaces are mirror symmetrical over an axis extending in the depth direction and intersection an extreme point of an associated ridge/groove.
According to a preferred embodiment, the central main pair of flanks form a central groove of the grooves. Thus, the central main pair of flanks of each insert interface form a central, deep groove and each auxiliary pair of flanks form less deep grooves on both lateral sides thereof. It is easier to produce grooves in a surface and, also the deepest portion of the central main pair of flanks are immersed into the flanks immersed into the insert body and thus better supported and stronger.

According to an embodiment, the turning insert further comprises a second cutting head at a rear end, wherein the support body extends in the longitudinal direction from the first cutting head to the second cutting head. Preferably, the turning insert has exactly these two cutting heads. Preferably, the two cutting heads carry one transverse cutting edge each. Preferably, the turning insert is mirror symmetrical over a cross section perpendicular to the longitudinal axis half way between the front end and the rear end.

An inventive turning tool body holding a turning insert cutting metal workpieces, preferably by grooving or parting, wherein the turning tool body comprises an insert seat for receiving the turning insert, which insert seat extends longitudinally rearward from an opening at the front end, wherein the insert seat comprises
- a top surface, which extends longitudinally rearward from the opening in the front end,
- a bottom surface, which extends rearwards from the opening at the front end and faces the top surface,
wherein
- the top surface and the top bottom surface both comprise one tool interface each for, when the turning insert is received in the insert seat, mate with a respective one of two insert interfaces,
- each tool interface comprises a set of flanks forming alternating ridges and grooves, wherein the ridges and grooves extend in a length direction,
- each flank of each set of flanks extends from an outer peak of an associated ridge to an inner bottom of an associated groove,
- each set of flanks comprises a central main pair of flanks, which consists of the first flank on a respective lateral side of the longitudinal axis, and
- as seen in a cross section perpendicular to the length direction, the outer contour of the alternating ridges and grooves forms a wave-shaped curve, which wave-shaped curve has an amplitude in a depth direction, wherein each flank has a depth measured in the depth direction, and wherein the central main pair of flanks have the same depth at least along a major portion of the extension in the length direction,
- at least along a major portion of the extension in the length direction of the flanks, as seen in the cross section perpendicular to the length direction, the depth of the central main pair of flanks is larger than the depth of all other flanks of the same tool interface.

The tool interfaces are designed to mate with the insert interfaces.

According to embodiments, the tool interfaces have some or all of the features of the insert interfaces described above.

An inventive turning tool for cutting metal workpieces, preferably by grooving or parting comprises the inventive turning tool body and the inventive turning insert described above, wherein
- the central main pair of flanks and the auxiliary pairs of flanks of the insert interfaces form one of the longitudinal ridges and grooves,
- the central main pair of flanks and the auxiliary pairs of flanks of the tool interfaces form the other one of the longitudinal ridges and grooves, and
- the turning insert is received in the insert seat such that both of the insert interfaces mate with a respective one of the two tool interfaces, wherein all ridges are received in one respective groove.

Preferably, all adjacent flanks of the ridges and grooves have points of contact. Thereby, a strong and secure interface is achieved.

### Brief description of the drawings

In the following, example embodiments will be described in greater detail and with reference to the accompanying drawings, in which:
Fig. 1 is a perspective top view of a first embodiment of a turning tool for grooving or parting of metal workpieces according to the present invention;
Fig. 2 is a perspective top view of a first embodiment of the turning insert according to present invention;
Fig. 3 is a perspective bottom view of the first embodiment of the turning insert;
Fig. 4 is a cross sectional view as indicated by IV - IV in Fig 3 of the first embodiment of the turning insert;
Fig. 5 is an enlarged view of a top area of Fig. 4;
Fig. 6 is a perspective top view of a first embodiment of a turning tool body according to the present invention, the first embodiment of the turning insert, and the clamping screw;
Fig. 7 is a perspective bottom view of the first embodiment of a turning tool body, the first embodiment of the turning insert, and the clamping screw;
Fig. 8 is a cross sectional view as indicated by VIII - VIII in Fig. 1 of the first embodiment of the turning tool;
Fig. 9 is a perspective top rear view of a second embodiment of the turning insert according to present invention;
Fig. 10 is a perspective bottom view of the second embodiment of the turning insert;
Fig. 11 is a perspective top front view of the second embodiment of the turning insert;
Fig. 12 is a front end view of the second embodiment of the turning insert;
Fig. 13 is a side view of the second embodiment of the turning insert;
Fig. 14 is a cross sectional view as indicated by XIV - XIV in Fig 13 of the second embodiment of the turning insert; and
Fig. 15 is a cross sectional view as indicated by XV - XV in Fig 13 of the second embodiment of the turning insert.

All the figures are schematic, not necessarily to scale, and generally only show parts which are necessary in order to elucidate the respective embodiments, whereas other parts may be omitted or merely suggested. Unless otherwise indicated, like reference numerals refer to like or corresponding parts in different figures.

### Detailed description

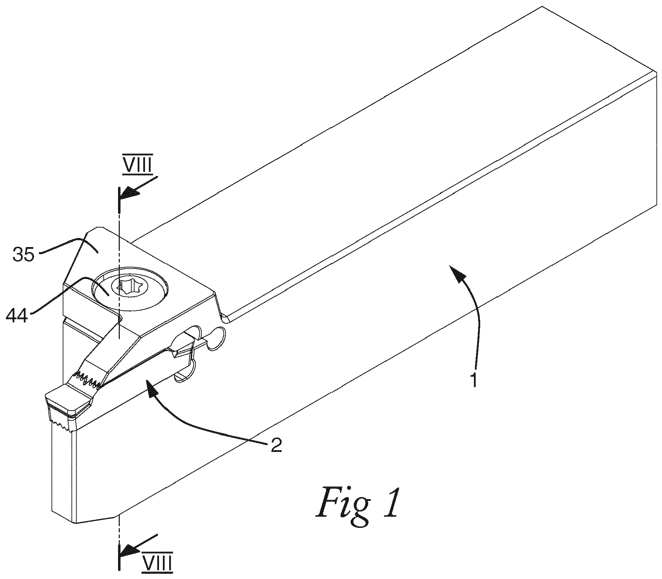

In Fig. 1, a first embodiment of a turning tool for grooving or parting of metal workpieces according to the present invention is shown. The turning tool comprises a first embodiment of a tool body 1 and a first embodiment of turning insert 2. The turning insert 2 is received in the tool body 1 as will be described in more detail below.

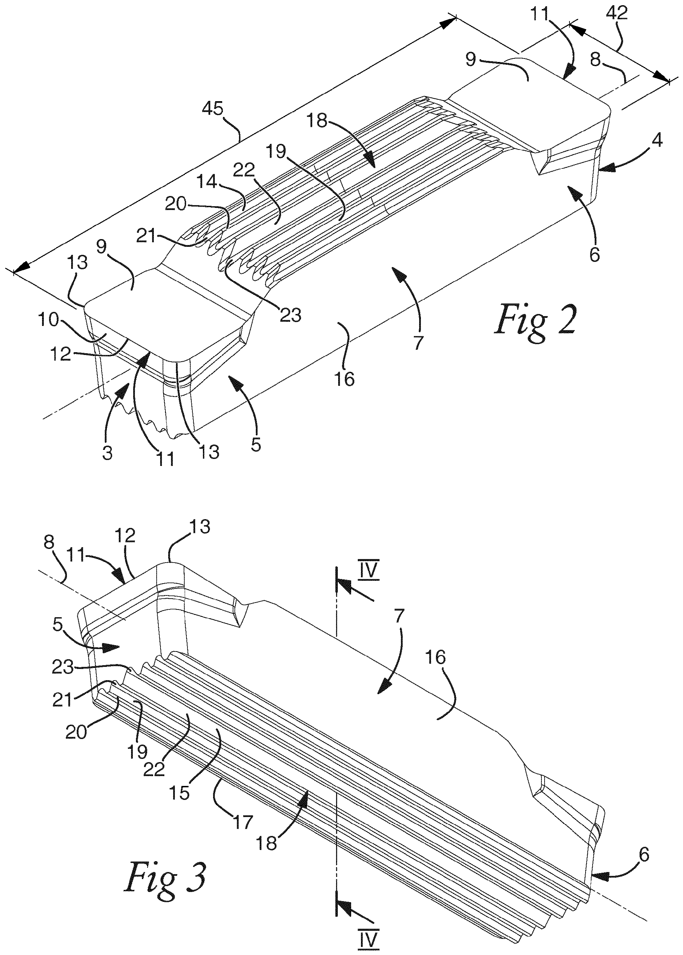

With reference to Figs. 2 - 5, the first embodiment of the turning insert 2 according to present invention is described. The turning insert 2 has a body extending from a front end 3 to a rear end 4. The body comprises a first cutting head 5 at the front end 3, a second cutting head 6 at the rear end 4, and a support body 7, which extends rearward from a rear end of the first cutting head 5 to a froward end of the of the second cutting end 6.

The support body 7 has a central longitudinal axis 8, which in the first embodiment coincides with a central longitudinal axis of the first cutting head 5 and of the second cutting head 6.

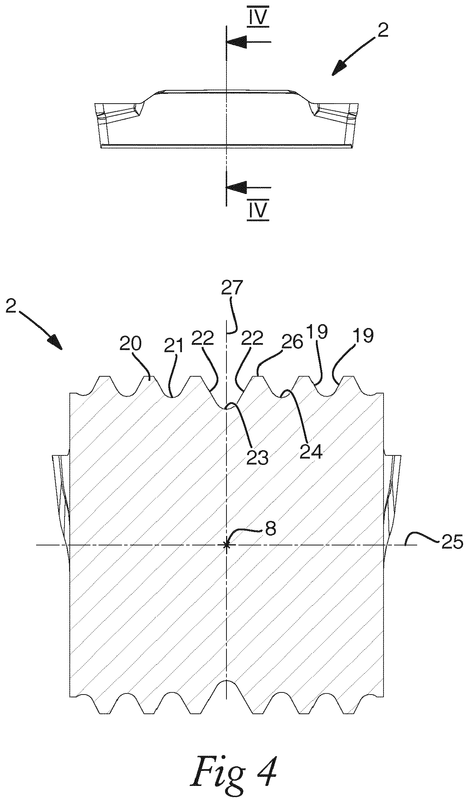

A lateral direction 25 (c.f. Fig. 4), or in other words, a transverse direction, in the support body 7 is a direction sideways and perpendicular to the longitudinal axis 8.

Each cutting head 5, 6 comprises a rake surface 9, a clearance 10 and a cutting edge 11 at an intersection of the rake surface 9 with the clearance surface 10. The rake surface 9 is a portion of a top surface and the clearance surface comprises a portion of a front end surface. The cutting edge 11 comprises a main portion 12 extending in a transverse direction along the front end surface. The main portion 12 of the cutting edge 11 is linear both as seen in a top view and in a front view. The cutting edge 11 comprises two corner portions 13 that connect with the main portion 11 on one respective lateral sides thereof and extend a short distance longitudinally away. The maximal length in the lateral direction of the cutting edge 13 is the maximal breadth of the turning insert and is 4 mm.

The turning insert has maximal length 45 of 35 mm in the longitudinal direction.

The support body 7 comprises a top surface 14, a bottom surface 15, a first lateral side surface 16 and a second lateral side surface 17, which all extend longitudinally rearward from the first cutting head 5. The first lateral side surface 16, and a second lateral side surface 17 are connected with the top surface 14 and the bottom surface 15 along a respective longitudinal edges. The lateral side surfaces 16, 17 face in opposite lateral directions and are parallel, planar surfaces. The top surface 14 and the bottom surface 15 extend on opposite sides of the support body and face away from each other. The top surface 14 and the bottom surface 15 are parallel. The overall shape of the support body 7 is similar to a rectangular cuboid.

One respective insert interface 18 is provided in the top surface 14 and the bottom surface 15 of the support body 7.The interfaces 18 are symmetrical to each other both with respect to 180° rotation around the longitudinal axis 8 and/or 180° rotation around a lateral axis 25. Therefore, only the insert interface 18 of the top surface 15 will be described.

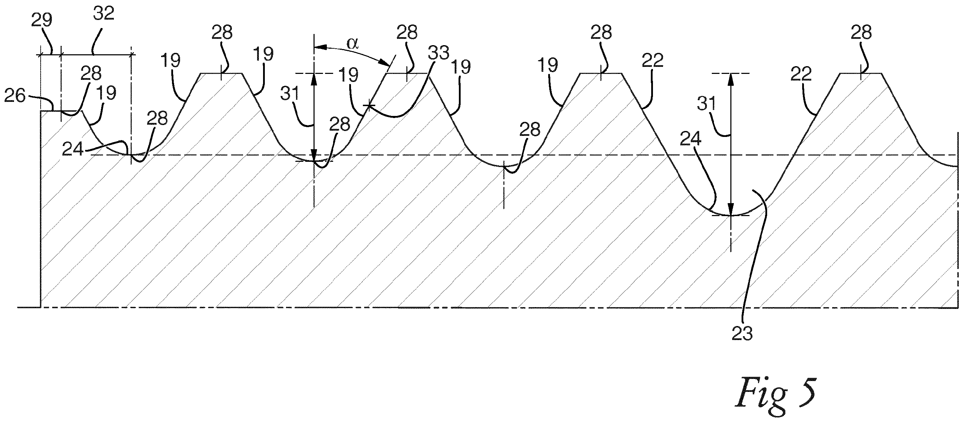

Each insert interface 18 comprises a set of flanks 19, 22 forming alternating parallel and straight ridges 20 and grooves 21. The ridges 20 and grooves 21 extend in a length direction, which in the first embodiment is parallel with the central longitudinal axis 8. The ridges 20 and grooves 21 extend from the first cutting head 5 over the full longitudinal length of the support body 7 to the second cutting head 6. Each ridge has an outer peak 26 in form of a planar plateau and each groove has an inner, concave bottom 24, c.f. Figs. 4 and 5.

The flanks 19, 22 form pairs of flanks, and specifically a central main pair of flanks 22 and auxiliary pairs of flanks 19. Each flank 19 of each set of flanks extends from the outer peak 26 of an associated ridge 20 to an inner bottom 24 of an associated groove 21.

The main pair of flanks 22 extend on one respective side of the longitudinal axis 8 and are the flanks closest to the longitudinal axis of all flanks 19, 22 of the set of flanks. In the first embodiment, the main pair of flanks 22 form a central groove 23 of the grooves 21.

The auxiliary pairs of flanks 19 form three grooves 21 on either side of the central groove 23.

With reference to Fig. 4, a cross section perpendicular to the length direction, wherein the length direction in the first example embodiment is the longitudinal axis 8, comprises a lateral axis 25. In the cross section, an axis that is perpendicular to both the longitudinal axis 8 and the lateral axis 25, is a depth axis 27.

As seen in the cross-section, the outer contour of the alternating ridges 20 and grooves 21 forms a wave-shaped curve. Each flank 19 has a depth 31 measured in the depth direction 27 from an outer peak 26 to an inner bottom 24. The depth 31 of a flank 19, 22 corresponds to an amplitude of the wave-shaped curve. The outer peaks 26 and the inner bottoms 24 have extreme points 28 seen in the wave-shaped curve.

The central main pair of flanks 22 have the same depth. The flanks 19 of the first and second of the three auxiliary pairs to the lateral sides of the main pair of flanks 22, each have the same depth. However, for each auxiliary pair, the depth decreases laterally outward. The depth of the main pair of flanks 22 is 0,6mm. On both sides of the main pair of flanks 22, the depth of the first auxiliary pair of flanks is 0,2 mm, which is 1/3 of the depth of the main pair of flanks 22. The depth of the second pair of auxiliary flanks is 0,1 mm, and the depth of the second most outer lateral flank 19 is 0,05 mm. The outermost flank 19 is less deep and the peak 26 of the associated ridge 20 meets the lateral side16, 17 so that that ridge lacks a second flank. The outermost ridge 20 is an incomplete ridge 20. The insert interface 18 extends from the first lateral side 16 to the second lateral side 18.

The insert interface 18 of the first embodiment comprises one outermost, incomplete ridge 20 at one lateral, longitudinal extending edge each, and three inner ridges 20 on both sides of the central longitudinal axis 8. Thus, in total eight ridges 20 and seven grooves 21 including the central groove 23.

All inner ridges 20 have the same distance to the top surface 14, wherein their peaks 26 extend in a plane parallel to the top surface 14 .

The extreme point 28 of the peak 26 of the laterally outermost incomplete ridge 20, as measured in the lateral direction, has a distance 29 to the closest lateral side surface 16, 17 of at least 40% and most 60 % of the distance 32 to the next extreme point (28) in a bottom 24 of a groove 21 laterally inward therefrom. In the first embodiment, the distance 29 is 0,5 mm and the distance 32 is 1,00 mm.

A cross section perpendicular to the length direction, which in the first example embodiment is the longitudinal axis 8, each flank 19, 22 has a tangent in a mid-point 33 at half the depth 31, which tangent forms an angle α with an axis extending in the depth direction 27. The angle α of both flanks 22 of the central pair of flanks is 30 °. The angle α of all other flanks 19 is 28°.

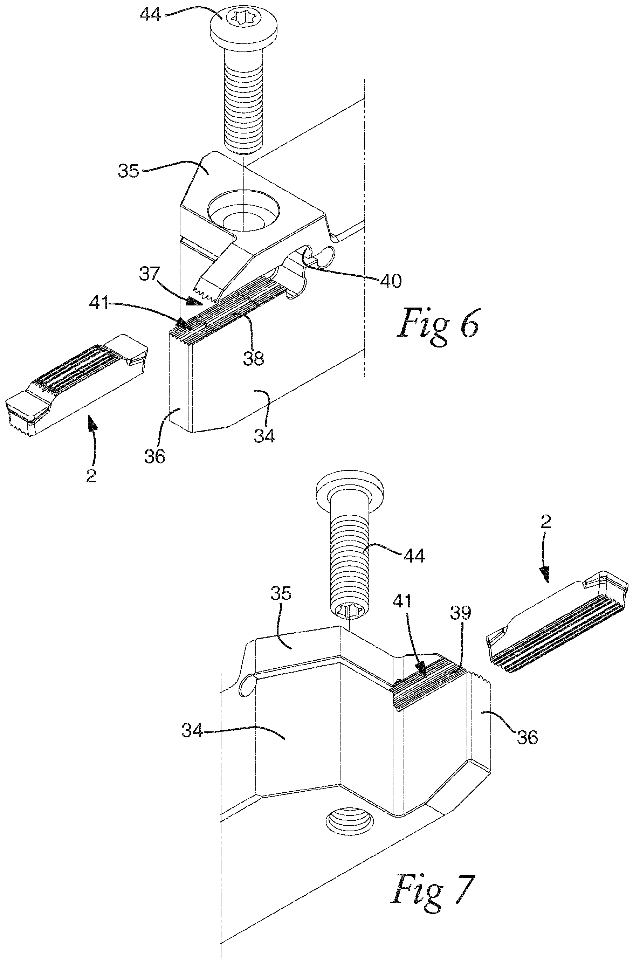

With reference to Figs. 6 - 8, the first embodiment of a turning tool body 1 according to the first embodiment of the present invention is described. The tool body comprises a base body 34 having a longitudinal extension rearward from a front end 36, and a clamping body 35 arranged at the front end 36 of the base body 34. An insert seat 37 extends longitudinally rearward from an opening at the front 36. The insert seat is delimited by a top surface 39 located on the clamping body 35 and a bottom surface 38 located on the base body 34, and a rear surface 40 where the clamping body 35 is pivotably connected to the base body 34. The top surface 39 and the bottom surface 38 face each other on opposite sides of the insert seat 37. The insert seat 37 is open in a forward longitudinal direction and has open lateral sides.

The top surface 39 and the bottom surface 38 both comprise one tool interface 41 each for, when the turning insert 2 is received in the insert seat 37, mate with a respective one of the two insert interfaces 18.

The tool interfaces 41 are inverse to the insert interfaces 18 described above. Therein, the tool interfaces 41 have ridges 20 where the insert interfaces 18 have grooves 21, and grooves 21 where the insert interfaces 18 have ridges 20. The tool interfaces 41 have features corresponding to the features of the insert interfaces 18 described above and are therefore not explained in detail.

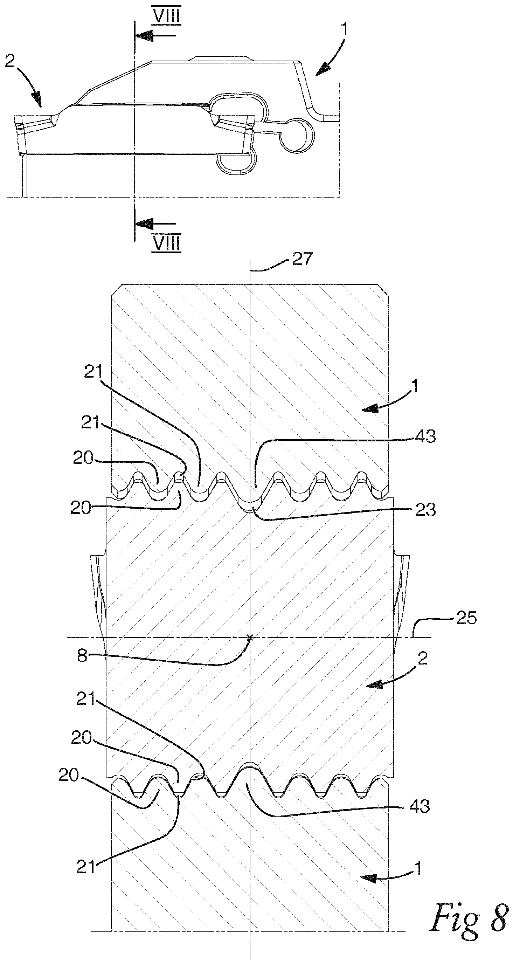

With reference to Fig. 1, and Figs. 6 -8, the first embodiment of a turning tool comprising the first embodiment of a tool body 1 described above and the first embodiment of turning insert 2 described above are described, wherein the turning insert 2 can be seen mounted in the insert seat 37 in Figs. 1 and 8. In the mounted position, the insert interfaces 18 and the tool interfaces 37 are engaged and mate. Each ridge 20 of the tool interfaces 37 is received in one respective groove 21 of a mating one of the insert interfaces 18. The central main pair of flanks 22 of the insert interface 18, which form the central groove 23, are received in between the central main pair of flanks 22 of the tool interface 41, which form a central ridge 43 of the ridges 20. This is the only position in which the insert interfaces 18 can mate with the tool interfaces 41.

The turning insert 2 is clamped between the clamping body 35 and the base body 34 in the insert seat 37. A clamping screw 44 extends through a through hole in the clamping body 35 and is threaded in a threaded hole in the base body 34. The clamping screw is tightened so that the clamping body 35 is forced against the base body 34, wherein the turning insert 2 is securely held in the insert seat 37.

According other embodiments, other ways to securely hold the turning insert in an insert seat may be used, such as for example by means of structures comprising a clamping body in form of a separable component, or in form of a portion of claw that holds the insert by tension without the need of a bolt or a screw.

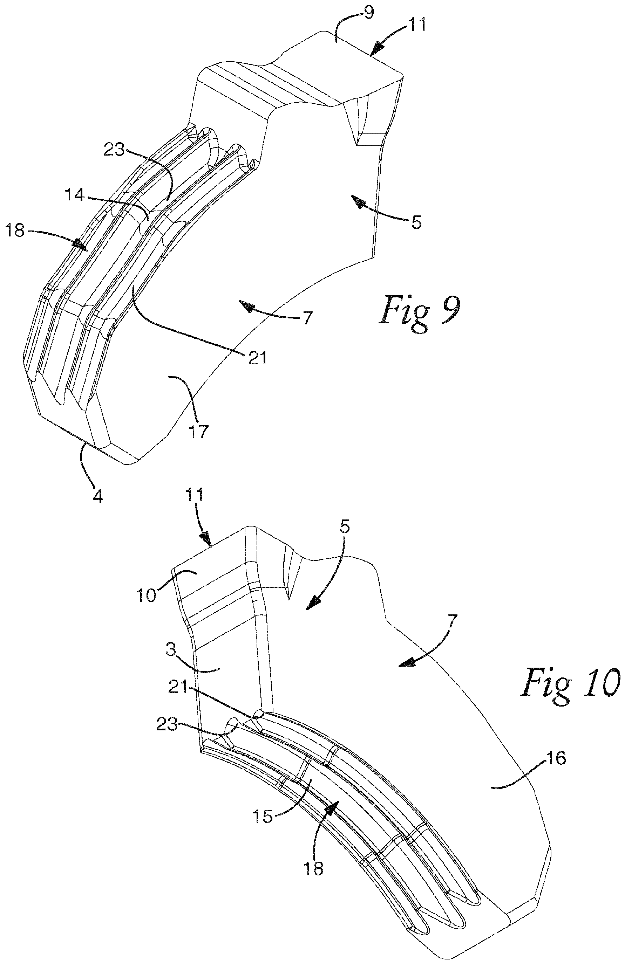

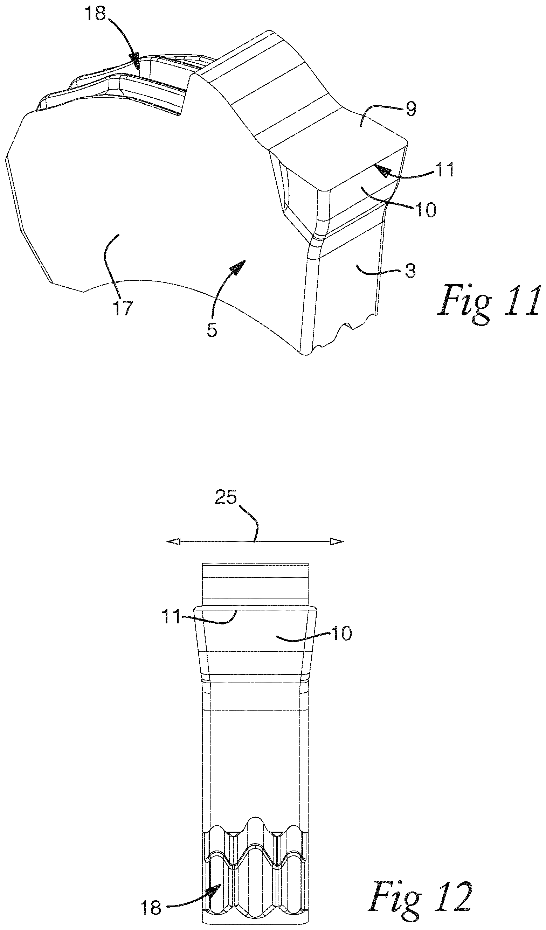

With reference to Figs. 9 - 15, a second embodiment of the turning insert 2 according to the present invention is described. The second embodiment has most features in common with the first embodiment and differs therefrom mainly in that it has only a first cutting head 5 at a front end 3 and in overall shape.

The support body 7 extends rearward from a rear end of the first cutting head 5 to a rear end 4, which is also a rear end of the turning insert 2 itself. The support body 7 has an overall shape of a bent rectangular cuboid, or in other words, a segment of an arch. The support body 7 has a longitudinal axis 8 extending from the front end 3 to the rear end 4, and coincides with a longitudinal axis of the first cutting head 5. The first cutting head 5 including the cutting edge 11, the rake surface 9 and the clearance surface 10 correspond to the first cutting head 5 of the first embodiment described above.

The support body 7 comprises a top surface 14, a bottom surface 15, a first lateral side surface 16 and a second lateral side surface 17, which all extend longitudinally rearward from the first cutting head 5. The first lateral side surface 16, and the second lateral side surface 17 are connected with the top surface 14 and the bottom surface 15 along respective longitudinal edges. The lateral side surfaces 16, 17 face in opposite lateral directions and are parallel, planar surfaces.

The top surface 14 and the bottom surface 15 extend on opposite sides of the support body and face away from each other. The top surface 14 comprises three angled part surfaces 14a, 14b, 14c extending in planes angled relative each other. The bottom surface 15 is a concavely curved surface.

One respective insert interface 18 is provided in the top surface 14 and the bottom surface 15 of the support body 7. Each insert interface 18 comprises a set of flanks 19, 22 forming alternating parallel and straight ridges 20 and grooves 21. The ridges 20 and grooves 21 extend in a length direction, which is a direction following the corresponding surface 14, 15 longitudinally rearwards from a front end to a rear end thereof. Thus, the ridges 20, and grooves 21 extend longitudinally and are straight as seen in a top view. As seen in a side view perpendicular to one of the lateral side surfaces, the ridges 20 and grooves 21 of the insert interface 18 of the top surface 14, comprises angled part sections, which each are parallel with a respective one of the angled part surfaces 14a, b, c. Correspondingly, as seen in the side view, the ridges 20 and grooves 21 of the insert interface 18 of the bottom surface 15, follow the concavely curved shape thereof. Thereby, the length direction of the ridges and grooves is different in different longitudinal positions.

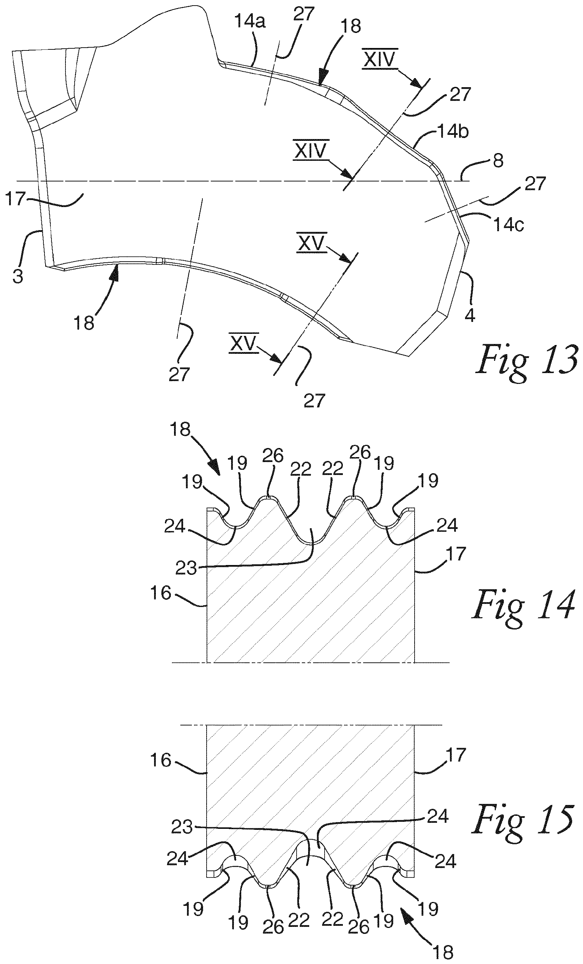

In any position along the longitudinal axis 8, a cross section perpendicular to the length direction, an axis that is perpendicular to both the longitudinal axis 8 and the lateral axis 25, is a depth axis 27. As can be seen in Fig. 13, the depth direction 27 is different in different longitudinal positions. As seen in a cross section perpendicular to the length direction in any longitudinal position, the depth direction 27 corresponds to the direction of measuring amplitude of the wave-shaped curve formed by the outer contour of the alternating ridges 20 and grooves 21. While the cross section has different tilt around the lateral axis in different longitudinal positions, the plane of any cross section perpendicular to length direction comprises the lateral axis 25 and the depth axis 27.

Fig. 14 shows the turning insert according to the second embodiment as seen in the cross section perpendicular to length direction, wherein the contour of the ridges 20 and grooves 21 of the insert interface 18 at the part surface 14b can be seen.

Fig. 15, shows the turning insert according to the second embodiment as seen in the cross section perpendicular to length direction, wherein the contour of the ridges 20 and grooves 21 of the insert interface 18 at the bottom surface 15 can be seen.

As seen in the views of Figs. 14 and 15, both insert interfaces 18 have corresponding features. The main pair of flanks 22 form a central groove 23 of the grooves 21. The auxiliary pairs of flanks 19 form one groove on either side of the central groove 23. The shape and measurements of the flanks 19, 22 of the second embodiment are the same as corresponding flanks 19, 22 of the first embodiment.

## Claims

1. A turning insert for cutting metal workpieces, preferably by grooving or parting having an insert body comprising
- a first cutting head (5) at a front end and a support body (7) extending rearward from the first cutting head (5), wherein the support body (7) has a longitudinal axis (8) extending rearward from the first cutting head (5),
wherein the support body (7) comprises
- a top surface (14) and a bottom surface (15), which each extend longitudinally rearward form the cutting head,
- a first lateral side surface (16) and a second lateral side surface (17), which both, along a respective lateral side of the support body (7), extend longitudinally rearward from the first cutting head (5) and are connected with the top surface (14) and the bottom surface (15) along a respective longitudinal edge, wherein
- the top surface (14) and the bottom surface (15) both comprise one insert interface (18) each for, when the turning insert is received in an insert seat (37) in a tool body (1), mate with a respective one of two tool interfaces (41),
wherein
- each insert interface (18) comprises a set of flanks (19, 22) forming alternating parallel, straight and rearward extending ridges (20) and grooves (21), wherein the ridges (20) and grooves (21) extend in a length direction,
- each flank (19, 22) of each set of flanks extends from an outer peak (26) of an associated ridge (20) to an inner bottom (24) of an associated groove (21),
- each set of flanks (19, 22) comprises a central main pair of flanks (22), which consists of the first flank on a respective lateral side of the longitudinal axis (8), and
- as seen in a cross section perpendicular to the length direction, the outer contour of the alternating ridges (20) and grooves (21) forms a wave-shaped curve, which wave-shaped curve has an amplitude in a depth direction (27), wherein each flank (19, 22) has a depth ( 31) measured in the depth direction (27), and wherein the central main pair of flanks (22) have the same depth (31) at least along a major portion of the extension in the length direction,
**characterized in that**
- at least along a major portion of the extension in the length direction of the flanks (19, 22), as seen in the cross section perpendicular to the length direction, the depth (31) of the central main pair of flanks (22) is larger than the depth (31) of all other flanks (19) of the same insert interface (18).

2. The turning insert according to claim 1, wherein
- each set of longitudinally extending flanks (19, 22), on both lateral sides of the central main pair of flanks (22), comprises several auxiliary pairs of flanks (19),
- both flanks (19) of each auxiliary pair of flanks (19) has the same depth (31), wherein
- each pair of the auxiliary pairs of flanks have a depth that is at most 1/3 of the depth (30) of the central main pair of flanks (22).

3. The turning insert according to any preceding claim, wherein for each pair of the auxiliary pairs of flanks (19), the depth (31) decreases laterally outwards from the central main pair (22).

4. The turning insert according to any preceding claim, wherein the depth (31) of the central main pair of flanks (22) is 0, 4 - 0, 8 mm.

5. The turning insert according to any preceding claim, wherein the ridges (20) and grooves (21) of each insert interface comprise a laterally outermost ridge (20) at each lateral side, and at least two inner ridges (20) therebetween, wherein the peaks (26) of all ridges (20), in the depth direction (27) have the same distance (30) to the top surface (14).

6. The turning insert according to any preceding claim, wherein the ridges (20) and grooves (21) are longitudinal.

7. The turning insert according to claim 6, wherein, as seen in the cross section perpendicular to the length direction,
- laterally inwards of each lateral side surface (16, 17), the longitudinal ridges (20) and grooves (21) of each insert interface (18) each have an extreme point (28) formed by either a peak (26) or a bottom (24), and
- a laterally outermost extreme point (28), as measured in the lateral direction (25), has a distance (29) to the closest lateral side surface (16, 17) of at least 40% of the distance (32) to the next extreme point (28) laterally inward therefrom.

8. The turning insert according to claims 6 or 7, wherein, as seen in the cross section perpendicular to the length direction,
- laterally inwards of each lateral side surface (16, 17), the alternating ridges (20) and grooves (21) of each insert interface (18) each have an extreme point (28) by either a peak (26) or a bottom (24),
- a laterally outermost extreme point (28), as measured in the lateral direction (25), has a distance (29) to the closest lateral side surface (16, 17) of at most 60% of the distance (32) to the next extreme point (28) laterally inward therefrom.

9. The turning insert according to any preceding claim, wherein the first cutting head (5) comprises a laterally extending cutting edge (11) and has a maximal lateral cutting length (42) of 2 - 6 mm.

10. The turning insert according to any preceding claim, wherein, as seen in the cross section perpendicular to the length direction, each flank (19, 22) has a tangent in a mid-point (33) at half the depth (31), which tangent forms an angle α with an axis extending in the depth direction (27), wherein the angle α is 25° - 35°, preferably 28° - 31°.

11. The turning insert according to claim 10, wherein the angle α of the central main pair of flanks (22) is larger than the angle of all other flanks (19) of the same insert interface (18).

12. The turning insert according to any preceding claim, wherein the central main pair of flanks form a central groove of the grooves.

13. The turning insert according to any preceding claim, further comprising a second cutting head at a rear end, wherein the support body extends in the longitudinal direction from the first cutting head to the second cutting head.

14. A turning tool body for holding a turning insert according to an claim 1 - 13, comprising an insert seat for receiving the turning insert, which insert seat extends longitudinally rearward from an opening at the front end (36), wherein the insert seat comprises
- a top surface (39), which extends longitudinally rearward from the opening in the front end (36),
- a bottom surface (38), which extends rearwards from the from the opening at the front end (36) and faces the top surface (39),
wherein
- the top surface (39) and the bottom surface (38) both comprise one tool interface (41) each for, when the turning insert is received in the insert seat, mate with a respective one of two insert interfaces (18),
- each tool interface (41) comprises a set of flanks (19, 22) forming alternating ridges (20) and grooves (21), wherein the ridges (20) and grooves (21) extend in a length direction,
- each flank (19, 22) of each set of flanks extends from an outer peak (26) of an associated ridge (20) to an inner bottom (24) of an associated groove (21),
- each set of flanks (19, 22) comprises a central main pair of flanks (22), which consists of the first flank on a respective lateral side of the longitudinal axis (8), and
- as seen in a cross section perpendicular to the length direction, the outer contour of the alternating ridges (20) and grooves (21) forms a wave-shaped curve, which wave-shaped curve has an amplitude in a depth direction (27), wherein each flank (19, 22) has a depth ( 31) measured in the depth direction (27), and wherein the central main pair of flanks (22) have the same depth (31) at least along a major portion of the extension in the length direction (27),
**characterized in that**
- at least along a major portion of the extension in the length direction of the flanks (19, 22), as seen in the cross section perpendicular to the length direction, the depth (31) of the central main pair of flanks (22) is larger than the depth (31) of all other flanks (19) of the same tool interface (41).

15. A turning tool for cutting metal workpieces, preferably by grooving or parting comprising the turning tool body according to claim 14, and the turning insert according to any claim 1 - 13 and, wherein
- the central main pair of flanks and the auxiliary pairs of flanks of the insert interfaces form one of the longitudinal ridges and grooves,
- the central main pair of flanks and the auxiliary pairs of flanks of the tool interfaces form the other one of the longitudinal ridges and grooves, and
- the turning insert is received in the insert seat such that both of the insert interfaces mate with a respective one of the two tool interfaces, wherein all ridges are received in one respective groove.

16. The turning tool according to claim 15, wherein all adjacent flanks of the ridges and grooves have points of contact.
